# EUROPEAN PATENT SPECIFICATION

(11) **EP 3 427 089 B1**
(45) Date of publication and mention of the grant of the patent: **04.05.2022**
(21) Application number: 17707569.4
(22) Date of filing: 01.03.2017
(51) Int. Cl.: G01V 3/10

(54) **SCANNING DETECTOR AND CONTROL METHOD**
ABTASTDETEKTOR UND KONTROLLVERFAHREN
DÉTECTEUR À BALAYAGE ET PROCÉDÉ DE COMMANDE

(30) Priority: 07.03.2016 EP 16158912
(43) Date of publication of application: 16.01.2019
(73) Proprietor: Hilti Aktiengesellschaft, 9494 Schaan (LI)
(72) Inventor: ABU ANTOUN, Chafic, 9470 Buchs (CH)
(74) Representative: Hilti Aktiengesellschaft Corporate Intellectual Property
(86) International application number: PCT/EP2017/054698
(87) International publication number: WO 2017/153213

(56) References cited:
- EP-A1- 1 092 988
- EP-A1- 1 298 457
- WO-A1-2006/037176
- US-A- 5 729 143
- US-A1- 2010 164 512
- US-A1- 2010 186 504

## Description

### BACKGROUND OF THE INVENTION

The present invention relates to a handheld scanning detector, particularly for detecting structures embedded in concrete or masonry as known from EP 1 092 988 A1 and described in preamble of claim 1.

A scanning detector is known from US 7,355,410. The scanning detector recognizes and localizes iron reinforcement bars in concrete. The scanning detector cannot distinguish different materials, in particular, if different materials are in close vicinity.

US 2010/186504 relates to a handheld scanning detector comprising a motion sensor for detecting objects embedded in building structures.

### SUMMARY OF THE INVENTION

The scanning detector according to claim 1 is designed to detect and to identify first structures only made of iron-based objects and second structures comprising iron-based objects and non-magnetic and highly conductive metallic objects. The structures are below a surface, for instance embedded in masonry. A movement sensor determines a movement of the scanning detector along a measuring-direction. A field-sensor comprises a pair of primary pickup-coils, along the measuring-direction and an excitation-coil arrangement, arranged between the primary pickup-coils. A current source injects an alternating excitation-current in the excitation-coil arrangement. Thus, the excitation-coils are emitting a corresponding alternating magnetic field. A phase-analyser determines a phase (phi) between the alternating excitation-current and a difference of induced voltage-signals in the primary pickup-coils. An interpretation unit determines a slope of the phase. The interpretation unit identifies the structure by discriminating among the first structures and the second structures based on whether the slope is increasing or decreasing. A display or a transceiver is used to inform the user about the identified structure. A magnitude-analyser determines a magnitude of eddy currents in the primary pickup-coils, or the secondary pickup-coils. The identification unit identifies the structure as third structure only made of copper-based objects based on a flat slope of the phase (phi) and the magnitude exceeding a threshold.

The phase is a good indicator about the material composition. For a given scanning detector the slope of the phase will be always one of falling or rising when the detector is moved towards the first structure. The same scanning detector will have the opposite slope when the scanning detector is moved towards the second structure.

The non-magnetic and highly conductive metallic objects can have a specific conductivity at least of 250 nS/m. In a most preferred example the objects are copper-based or made of pure copper. In a further example, the objects can be made of aluminium.

An embodiment can have the primary pickup-coils, in an overlapping arrangement with the excitation-coil arrangement,. The overlap may such that at least a third of the area of each of the pickup-coils, is overlapping with the excitation-coil arrangement, and at least a half of each of the pickup-coils, is not overlapping with the excitation-coil arrangement,. This overlapping arrangement significantly improves the signal-to-noise ratio for the phase measurement.

In an embodiment the excitation-coil can comprise two circular or elliptical excitation-coils, which are displaced to each other along the measurement-direction. The field-sensor is sensitive on misalignment of the coils. The separation of the excitation coil arrangement in two coils reduces the sensitivity.

An embodiment comprises a pair of secondary pickup-coils, arranged on an axis perpendicular to the measurement-direction.

The additional measurement of the magnitude allows for correctly identifying nearly all metallic subwall structures.

An embodiment uses a frequency of the alternating current in the range of 8 kHz and 25 kHz.

### BRIEF DESCRIPTION OF THE DRAWINGS

Exemplary embodiments of the present invention are described below with reference to the drawings. The drawings do not necessarily illustrate the exemplary embodiments to scale, but, rather, are depicted in schematic and/or slightly distorted form when this is useful for the explanation. With respect to additions to the teaching which are directly apparent from the drawings, reference is made to the relevant related art. In this regard it is noted that a variety of modifications and alterations regarding the form and the detail of a specific embodiment may be made within the scope of the invention as defined by the appended claims. The features of the present invention disclosed in the description, the drawings, and the claims may be important to the refinement of the present invention, taken alone as well as in any given combination within the scope of the invention as defined by the appended claims.

For given dimension ranges, values within the stated limits are also intended to be disclosed as limiting values, and may be used and claimed as desired. For the sake of simplicity, the same reference numerals are used below for identical or similar parts or parts having an identical or similar function.
- Fig. 1: shows a scanning detector for subsurface structures
- Fig. 2: shows the scanning detector hovering above subsurface structures
- Fig. 3: shows a field-sensor of the scanning detector
- Fig. 4: shows a scanning result for an iron rod under a wall surface
- Fig. 5: shows a scanning result for a copper rod under a wall surface
- Fig. 6: shows a scanning result for an iron rod and a copper rod under a wall surface

### DETAILED DESCRIPTION

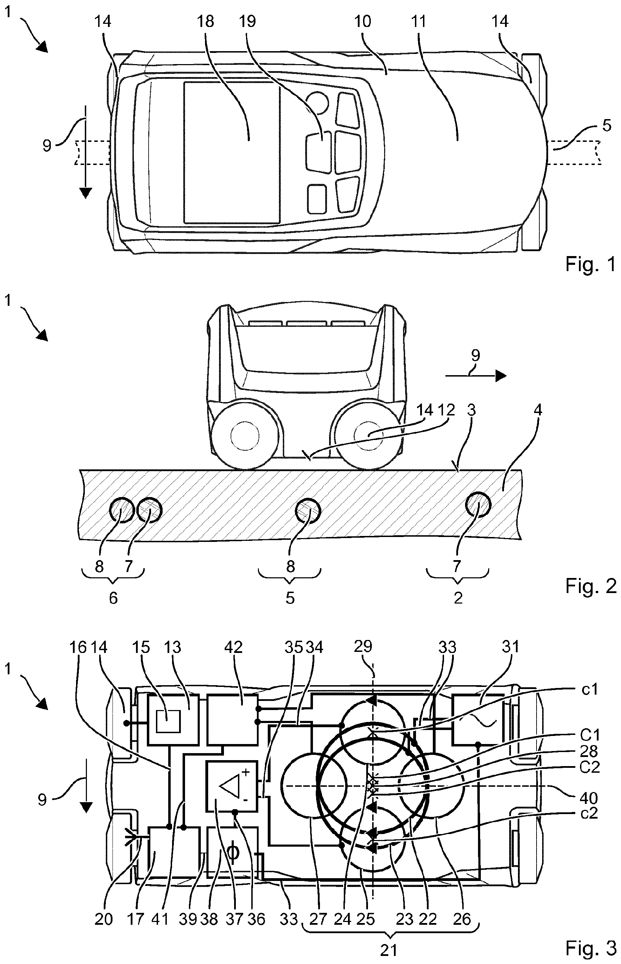

Fig. 1 shows a scanning detector (1) according to the present invention for detecting and identifying a subsurface structure (2) hidden below a surface (3). The surface (3) is in particular a surface of a building, like a wall (4), a ceiling, a floor. The surface (3) is made of non-magnetic and non-metallic materials used in constructing buildings, like concrete, stone, brick, wood, carpet, paper, etc.. The subsurface structure may contain metallic supporting structures like armouring irons made of steel (2), etc.; electric installations like power lines made of copper (5), etc.; or other installations like water tubes, gas tubes, etc. or the subsurface structure (6) may contain more than one type. The different structure types may in close proximity, even touching.

The scanning detector (1) is moved along a linear path or a curved path on the surface (3). The movement leads to a spatial shift of the scanning detector (1) with respect to the structure (2) and a related change in a detected electromagnetic signal. The correlation between the spatial shift and the change in the signal is used for an identification of the position of the structure (2) and its metallic composition within the scanning detector's visual range. Even though the over-all subsurface structure (2) is most likely larger than the visual range and the subsurface structures (2) may have a different composition inside and outside of the visual range the description only considers the composition visible to the scanning detector (1), i.e. the part of the structures within the visual range.

The scanning detector (1) can distinguish between subsurface structures (2) made only of iron-based objects (7) and subsurface structures (6) made of iron-based objects (7) and copper-based objects (8). Iron-based objects have a high content of at least 50 %, preferably 75 % of iron, e.g. steel. The magnetic and electric properties of the object are dominated by the iron content. The Iron-based objects (7) have a very high relative magnetic permeability (> 100) and for a metal moderate electric conductivity, typically less than 100 nS/m (nano Siemens per meter). Steel-based objects (8) have a conductivity in the range of 10 nS/m to 50 nS/m. Copper-based objects have a high content of at least 50 %, e.g. 75 %, preferably 90 % of copper. The magnetic and electric properties of the object are dominated by the copper content. Copper has a very weak response to magnetic fields. The relative magnetic permeability has a value of 0.999'994, thus nearly 1 and significantly lower than iron or steel. The electric conductivity is high, about 600 nS/m, and significantly higher than iron or steel. Aluminium has some similarity to copper regarding these properties, i.e. a feeble response to magnetic fields (1.000'022) and a high electric conductivity (350 nS/m). Copper and Aluminium are members of a group of non-magnetic (about 1.00) and highly conductive metals (>250 nS/m). Both copper and aluminium are the typical materials for power lines (5) because of their high conductivity. Coatings of polymers, paper, fabric or other electrically isolating materials are disregarded and do not contribute to the content of the copper-based object or iron-based object. The objects (7, 8) are preferably massive or hollow rods.

The scanning detector (1) may be manually moved by a user along a direction (9). The illustrated hand-held scanning detector has a housing (10) with a handle section (11). The user can grasp the handle section (11) and slide the scanning detector (1) along the surface (3). Thereby, a bottom surface (12) of the housing (10) preferably moves in parallel to the surface (3). A movement sensor (13) detects the movement of the scanning detector (1) along the surface (3). The illustrated scanning detector (1) uses wheel-shaped rollers (14) and a speedometer (15) to measure the movement relative to the wall (4). The rollers (14) may be ball-shaped allowing for movements along a curved path. The movement sensor (13) can be based on an optical sensor as known from an optical mouse for computers. The position of the scanning detector (1) can be tracked by an external tracker and receiving its position by the tracker. Further techniques for measuring the movement of the scanning detector (1) can be employed.

The movement sensor (13) delivers continuously or in intervals a movement-signal (16). The movement-signal (16) may contain information on position (x), velocity, acceleration, etc. of the scanning detector (1). An interpretation unit (17) derives the present position (x) based on the movement-signal (16). The user preferably moves the scanning detector (1) continuously in one measuring-direction (9) but can as well move the scanning detector (1) back and forth, in particular in areas where the user assumes a structure (2). The interpretation unit (17) distinguishes movements to the left and right and derives by the movements the actual position (x). Preferably, the interpretation unit (17) identifies movements in the plane, i.e. from left to right and vice versa as well as up and down.

The scanning detector (1) has a display (18) for displaying the position of hidden subsurface structure (2) and its material composition. The scanning detector (1) may comprise input elements (19) for starting the scanning process, recalibrating the scanning detector (1), changing display settings etc. The display (18) and the input elements (19) may be incorporated in the housing (10) of the scanning detector (1). The scanning detector (1) may be equipped with a transceiver (20) for communicating with a detachable display, a detachable input device, a mobile device, a computer or other equipment. The transceiver (20) may transmit information to be illustrated on the external display instead or in addition to the display (18) and receive input parameter for controlling the scanning detector (1) instead or in addition to the input elements (19). The transceiver (20) may incorporate a short range wireless communication protocol like bluetooth or a long range communication protocol like GSM.

The illustrated scanning detector (1) has an electromagnetic field-sensor (21) comprising an arrangement of two excitation-coils (22, 23) and four pickup-coils (24, 25, 26, 27). All six coils are arranged in parallel to the bottom surface (12) of the scanning detector (1). The coils are essentially flat. The height of the coils is by at least a magnitude smaller than a diameter of the coils. The vertical arrangement of the coils can be safely ignored in the ongoing description. Preferably, the four pickup-coils are arranged in one plane.

The excitation-coils (22, 23) are designed to generate identical magnetic fields while powered by identical currents. The design parameters like outer shape, diameter, number of windings, wire cross-section can be identical for both excitation-coils (22, 23) or be adopted such that one or more parameters compensate for other parameters to achieve the identical magnetic fields. The pair of excitation-coils (22, 23) is arranged symmetrically with respect to a centre (28) of the electromagnetic field-sensor (21).

The excitation-coils (22, 23) are aligned on an axis (29) parallel to the measuring-direction (9). A preferred example uses elliptic or circular excitation-coils (22, 23). Their respective centres (C1, C2) are located on the axis (29).

The excitation-coils (22, 23) are slightly displaced to each other along the axis (29), i.e. their respective centres (C1, C2) are offset to the centres (28). A first excitation-coil (22) is advancing the second excitation-coil (23) along the measuring-direction (9). The offsets (30) of both centres (C1, C2) to the centres (28) are preferably equal. The excitation-coils (22, 23) are overlapping. The respective radii (R1, R2) of the excitation-coils (22, 23) are significantly larger than the offsets (30). The radius (R1) may be at least five times larger than the offset. Preferably, the radii (R1, R2) are equal.

The pair-wise configuration of the excitation-coils (22, 23) is beneficial in terms of higher robustness and lower sensitivity of misalignment. Further, circular coils are easier to be manufactured. The pair of separate excitation-coils (22, 23) may be substituted by a single excitation-coil. The single excitation-coil may be designed based on the superposition of the above pair of excitation-coils (22, 23).

A pair of pickup-coils (24, 25) is located on the axis (29). These pickup-coils (24, 25) are called primary pickup-coils (24, 25). The primary pickup-coils (24, 25) are equally designed and generate the same eddy-current in amplitude and in phase when subjected to the same changing magnetic field. The design parameters comprise shape of the coil, diameter, number of windings, and cross-section of the wire. The pair of primary pickup-coils (24, 25) is arranged symmetrically with respect to the centre (28). The first primary pickup-coil (24) is located before the sensor centre (28); the second primary pickup-coil (25) is located behind the electromagnetic field-sensor (21) centre (28) as seen by the measuring-direction (9).

The primary pickup-coils (24, 25) are overlapping with the excitation-coils (22, 23), but are not overlapping with each other. The first primary pickup-coil (24) overlaps with the first excitation-coil (22) and may overlap with the second excitation-coil (23); the second primary pickup-coil (25) overlaps with the second excitation-coil (23) and may overlap with the first excitation-coil (22). The overlap is chosen such that no eddy current is generated in each of the primary pickup-coils (24, 25) in the only presence of air or in vacuum even though the excitation-coils (22, 23) are powered by the current source (31). The excitation-coils (22, 23) generate a magnetic flux perpendicular to the coils, at least in good approximation near the coils. The magnetic flux flows in opposite directions in the area inside the pair of excitation-coils (22, 23) compared to the magnetic flux in the area outside the pair of excitation-coils (22, 23). Each of the primary pickup-coils (24, 25) is located overlapping with the inside area and the outside area such that equal amounts of magnetic flow in both directions are flowing through the primary pickup-coil (24, 25). Hence, the effective magnetic flux is zero for the primary pickup-coil (24, 25) and no eddy-current is generated.

A preferred example uses elliptic or circular primary pickup-coils (24, 25). The respective centres (c1, c2) of the primary pickup-coils (24, 25) are preferably located on the axis (29). The primary pickup-coils (24, 25) are displaced by, preferably equal, displacement (32) to the sensor centre (28) along the axis (29). The displacement (32) is chosen to achieve the above described overlap of the primary pickup-coils (24, 25) and the pair of excitation-coils (22, 23). The displacement (32) equals the radius (R1) of the first excitation-coil (22) or is approximately 90 % to 100 % of the radius (R1). The centre (c1) of the first primary pickup-coil (24) is on or near the circumference of the first excitation-coil (22). The centre (c1) of the first primary pickup-coil (24) is preferably inside the first excitation-coil (22). Symmetrically, the second primary pickup-coil (25) is on or near the second excitation-coil (23).

The radii (r1, r2) of the primary pickup-coils (24, 25) are smaller than the radii (R1, R2) of the excitation-coils (22, 23), e.g. are less than 75 % of the radii (R1, R2). The pickup-coils (24, 25) do not overlap with each other.

The first primary pickup-coil (24) has a first sense of winding; the second primary pickup-coil (25) has a second sense of winding. The first sense of winding and the second sense of winding are equal, i.e. eddy-currents in the primary pickup-coils (24, 25) are of equal sign and phase for the same magnetic field.

The excitation-coils (22, 23) are powered by the same current source (31). The excitation-current (33) flows in the windings of the excitation-coils (22, 23) such that the excitation-current (33) flows in both excitation-coils (22, 23) in the same rotational direction around the centre (28). The magnetic fields of the two excitation-coils (22, 23) are parallel and are adding up. The current source (31) provides a periodically alternating excitation-current (33), preferably a sinusoidal current with at a pre-set frequency. The frequency is preferably in the range of 8 kHz to 30 kHz.

The induced voltage-signal (34) of the first primary pickup-coil (24) and the induced voltage-signal (35) of the second primary pickup-coil (25) are subtracted to generate a difference-signal (36). The first primary pickup-coil (24) and the second primary pickup-coil (25) may be interconnected in series by wire to obtain the difference-signal (36) with no circuitry. The induced voltage-signals (34, 35) may be forwarded to a differential amplifier (37) or a similar unit for determining the difference-signal (36). The induced voltage-signals (34, 35) may be individually pre-amplified or even phase-locked to two separate phase-locked loops for a higher signal-noise ratio. The difference-signal (36) can be generated based on the pre-amplified induced voltage-signals (34, 35).

The difference-signal (36) has the same modulation as the induced voltage-signals (34, 35) and the excitation-current (33). For the given example, the difference-signal (36) is sinusoidal with the pre-set frequency. A phase-difference (phi) of the difference-signal (36) and the excitation-current (33) is determined by a phase-analyser (38). The phase-difference (phi) short phase) is basically a measure for the delay of the difference-signal (36) with respect to the excitation-current (33). The phase-analyser (38) may be incorporated in a logic circuitry, e.g. a microprocessor, or may be implemented by an analogue electric phase detector.

An interpretation unit (17) receives the relative phase (phi) via a signal (39) from the phase-analyser (38). The interpretation unit (17) receives further a position signal (x) from the movement sensor (13). The interpretation unit (17) compares the relative phase (phi) versus the position (x) of the scanning detector (1).

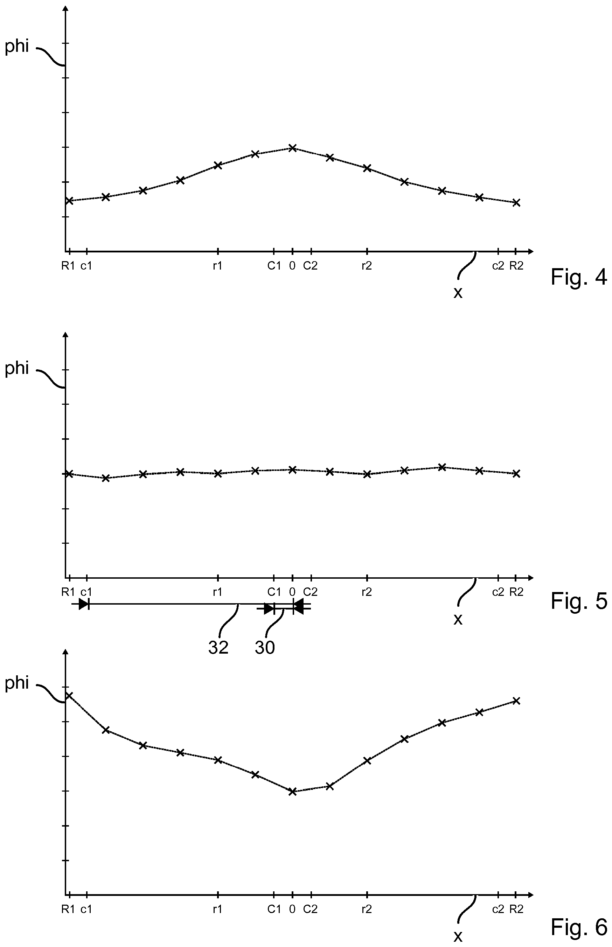

Fig. 4, Fig. 5 and Fig. 6 illustrate the phase (phi) over the position (x) characteristic while scanning over rods along the measuring-direction (9). The rod may extend perpendicular to the measuring-direction (9) as illustrated for the structure (5) in Fig. 1. The centre (28) of the electromagnetic field-sensor (21) corresponds to a position (x) equal 0. The exemplary position and dimensions of the first excitation-coil (22) are indicated by its centre (C1) and radius (R1); the position and dimensions of the second excitation-coil (23) are indicated by its centre (C2) and radius (R2). The position and dimensions of the first primary pickup-coil (24) are indicated by its centre (c1) and radius (r1); the position and dimensions of the second primary pickup-coil (25) are indicated by its centre (c2) and radius (r2). The measurements starts roughly once the rod is close to the circumference of the excitation-coils (22, 23). The y-axis indicates the relative phase (phi) in arbitrary units, both for the zero level and scaling. For instance, the zero level depends on whether the phase (phi) is measured with respect to a minimum, maximum or zero-crossing of the excitation-current (33). The scaling depends on the strength of the magnetic field and the excitation-current (33), for instance. Fig. 5 and Fig. 6 are to scale with Fig. 4; the zero levels of the phase (phi) are chosen independently. The frequency of the excitation-current (33) is 20 kHz for the illustrated example.

Fig. 4 shows the characteristic for a subsurface construction (2) with a single iron rod (7). The phase (phi) changes while the scanning detector (1) is moved. The characteristic shows a rising slope of the phase (phi) and reaches a maximum at the position (x) equals 0 (midpoint). The midpoint can be identified with the scanning detector (1) right above and closest to the rod. When the scanning detector (1) is moved away from the rod, the phase (phi) shows a falling slope. The rising slope and the falling slope are approximately symmetric with respect to the midpoint. The amplitude of the slope is significant. For the illustrated example, the phase (phi) changes by more than 30 degrees.

Fig. 5 shows the result for a structure (5) with a single copper rod (8). The relative phase (phi) is unaffected by the distance of the centre (28) to the copper rod. The relative phase (phi) stays almost constant. A single copper rod has no or no measureable impact on the phase (phi).

Fig. 6 illustrates the phase (phi) over position (x) for a structure (6) with an iron rod (7) and a joint copper rod (8). The subsurface structure (6) contains both kinds of rods and the rods are in close proximity. The scanning detector (1) cannot spatially separate the two rods as two separate entities. The distance of the different rods is smaller than the dimensions of the scanning detector (1). The phase (phi) changes while the scanning detector (1) is moved. The characteristic shows a falling slope of the phase (phi) and reaches a minimum at the midpoint. The phase (phi) increases once the scanning detector (1) is moved away from the midpoint. The amplitude of the slope is significant. The illustrated example shows an amplitude of almost 60 degrees.

The characteristic shown in Fig. 6 is surprising because of two aspects. First, it seems a fair assumption that a copper rod would have no influence on the phase (phi) based on the characteristic of Fig. 5. Second, the copper rod does not simply shift, add or scale the characteristic of Fig. 4 but reverses the characteristic around the midpoint. The iron rod has a raising slope towards the midpoint, i.e. a positive slope; the additional copper rod leads to a falling slope towards the midpoint, i.e. a negative slope. The slopes have opposite signs.

The different results of Fig. 4, Fig. 5 may be well understood. Steal is paramagnetic or ferromagnetic with high relative magnetic permeability in the range of 100 to 15'000. Copper is diamagnetic with a relative magnetic permeability of about 0.999'994; air and vacuum have a magnetic permeability of 1. Thus, it is not surprising copper has causes no considerable phase shift if compared to steel. The invention shall not be bound to the understanding of the effect of Fig. 6 outlined herein after, even if the understanding fails scientific standards, but only to the scanning detector making use of the effect. Copper is a very good electric conductor with a pronounced skin effect. The copper rod acts like a transceiver antenna and distorts the magnetic field for the steel rod. The steel rod interacts with the magnetic field of excitation-coils and cross-talks with the copper rod. This additional cross-talk leads to the non-linear behaviour. The effect shows to be most pronounced in a frequency range between 8 kHz and 30 kHz. It is assumed that the impedance (resistivity) of the steel rod dampens the cross-talk at frequencies above 30 kHz (kilohHertz). And, the signal transmission of copper is not yet pronounced or short-ranged at frequencies below 8 kHz.

The interpretation unit (17) discriminates among a subsurface structure (2) only made of iron-based objects and a subsurface structure (2) composed of iron-based objects (7) and copper-based objects (8) in close proximity. The objects are preferably massive or hollow rods. The interpretation unit (17) can additionally identify subsurface structures (2) only made of copper-based objects.

The interpretation unit (17) tracks the position (x) of the scanning detector (1) and the slope of the phase (phi). The below description is given based on the simplifying assumption the user continuously moves the scanning detector (1) in the same measuring-direction (9). A back-and-forth movement and a vertical movement require some more elaborate data processing but without departing from the basic concept.

The interpretation unit (17) may comprise a low-pass filter to implement the mathematical differential calculus of the phase (phi) over the position (x). The evolving phase (phi) is forwarded to the low-pass filter. The output of the low-pass filter is zero when the phase (phi) does not change with changing position (x). The filter-output of the low-pass filter has a positive value for a rising slope and a negative value for a falling slope. The rising slope or falling slope may be confirmed by a threshold comparator if the magnitude of filter-output exceeds a threshold value. Further, the rising slope or falling slope may be confirmed only if the filter-output stays above the threshold value over a significant distance of movement. For instance, the significant distance of movement is at least half the radius (R1) of the excitation-coil (22). In order to avoid a misreading, the slope can be verified to be monotonous until the centre (28). Further, it may be verified if the slope changes the sign after crossing the centre (28). The low-pass filter may be implemented by an analogue circuit, a digital circuit, a data processing unit, e.g. an algorithm processed in a microprocessor. The comparator can be implemented as an analogue circuit, a digital circuit, a data processing unit, e.g. an algorithm processed in a microprocessor. The low-pass filter is a simple means for determining the slope. Other means may include orthogonal regression or similar mathematical technics to calculate the average slope of several measurement points. The orthogonal regression can be implemented as an algorithm processed in a microprocessor.

The interpretation unit (17) discriminates among a rising slope and a falling slope towards the midpoint. The illustrated interpretation unit (17) identifies a rising slope with a subsurface structure (2) made only of iron objects (Fig. 4) and a falling slope with a subsurface structure (2) made of iron objects and copper objects (Fig. 6) within the visual range of the scanning detector (1). The interpretation unit (17) may further discriminate a structures made only of copper objects (Fig. 5). The interpretation unit (17) is knowledgeable which of the rising slope (positive sign) and the falling slope (negative sign) refers to an iron rod, and is knowledgeable that the slope of opposite sign refers to a mixed pair of rods. A memory unit may store the corresponding relation of the sign of the slope and material in a look-up table. The relation may be stored in the memory during manufacturing or determined by a calibration routine.

The optional pair of secondary pickup-coils (26, 27) can be arranged perpendicular to the pair of primary pickup-coils (24, 25). The secondary pickup-coils (26, 27) are arranged along a second axis (40) parallel to the surface (12) and perpendicular to the axis (29). The second axis (40) crosses the centre (28). The pair of secondary pickup-coils (26, 27) is arranged symmetrically with respect to the axis (29). Preferably, the secondary pickup-coils (26, 27) are circular or elliptic. Their respective centres may be located on the circumference of the excitation-coils (22, 23).

The magnetic field generates an eddy current in the secondary pickup-coils (26, 27). The amplitude of the eddy current corresponds to size and distance of the object, and if there is a rod. The magnitude of the eddy current rises with the scanning detector (1) moving towards the midpoint. A maximum magnitude is reached at the midpoint, i.e. when the scanning detector (1) is centred above the object. The rising slope of the magnitude is independent of the metal composition of the subsurface structure (2). A secondary-signal (41) corresponding to the magnitude of the eddy current is forwarded to the interpretation unit (17). The interpretation unit (17) can determine the size and distance of the structure (2) based on the magnitude at the midpoint and a look-up table of typical sizes of subsurface installations. A magnitude-analyser (42) determines the eddy current. The magnitude-analyser may be based on a volt-meter or ampere-meter.

The interpretation unit (17) can discriminate a structure (2) made only of copper-based objects (8) among other material compositions. The interpretation unit (17) determines if the slope of the phase (phi) is zero or below a threshold value, i.e. a flat slope. In concurrence, the interpretation unit (17) determines if the magnitude of the secondary-signal (41) exceeds a threshold. If so, the interpretation unit (17) identifies the secondary-signal (41) with a copper object. Alternatively or in addition, the magnitude-analyser determines the magnitude of the eddy currents in the primary pickup-coils (24, 25). On concurrence of a flat slope and a non-zero magnitude of eddy currents in the primary pickup-coils (24, 25) the interpretation unit (17) identifies a structure (6) in the visual range.

## Claims

1. Scanning detector (1) for detecting and identifying a structure as a first structure (2) only made of iron-based objects (7) or second structure (6) comprising iron-based objects (7) and non-magnetic and highly conductive metallic objects (8) below a surface (12), comprising:
a movement sensor (13) for determining a movement of the scanning detector (1) along a measuring-direction (9),
a field-sensor (13) comprising a pair of primary pickup-coils (24, 25) along the measuring-direction (9) and an excitation-coil arrangement (22, 23) arranged between the primary pickup-coils (24, 25),
a current source (31) injecting an alternating excitation-current (33) in the excitation-coil arrangement (22, 23),
a phase-analyser (38) determining a phase (phi) between the alternating excitation-current (33) and a difference (36) of induced voltage-signals (34, 35bz) in the primary pickup-coils (24, 25),
an interpretation unit (17) determining a slope of the phase (phi) and identifying the structure by discriminating among the first structures (2) and the second structures (6) based on whether the slope is increasing or decreasing, and
a display (18) or a transceiver (20) communicating the identified structure (2, 6),
**characterized by** an magnitude-analyser (42) determining a magnitude of eddy currents in the primary pickup-coils (24, 25) or the secondary pickup-coils (26, 27) and wherein the identification unit (17) identifies the structure as third structure (5) only made of copper-based objects (8) based on a flat slope of the phase (phi) and the magnitude exceeding a threshold.

2. Scanning detector (1) according to claim 1 wherein each of the primary pickup-coils (24, 25) is overlapping with the excitation-coil arrangement (22, 23).

3. Scanning detector (1) according to claim 2 wherein at least a third of each of the pickup-coils (24, 25) is overlapping with the excitation-coil arrangement (22, 23) and at least a half of each of the pickup-coils (24, 25) is not overlapping with the excitation-coil arrangement (22, 23).

4. Scanning detector (1) according to claims 1 to 3 wherein the excitation-coil (23) arrangement comprises two circular or elliptical excitation-coils (22, 23) which are displaced to each other along the measurement-direction (9).

5. Scanning detector (1) according to claims 1 to 4 wherein the field sensor (13) comprises a pair of secondary pickup-coils (26, 27) arranged on an axis (40) perpendicular to the measurement-direction (9).

6. Scanning detector (1) according to claims 1 wherein a frequency of the alternating current is in the range of 8 kHz and 25 kHz.

7. Scanning detector (1) according to claim 1 to 6 wherein the non-magnetic and highly conductive metallic comprise metals with an electric conductivity of at least 250 nS/m.

8. Scanning detector (1) according to claim 1 to 6 wherein the non-magnetic and highly conductive metallic objects (8) are copper-based objects (8) or aluminium-based objects (8).

9. Detection method of identifying first structures (2) only made of iron-based objects (7) and second structures (6) comprising iron-based objects (7) and non-magnetic and highly conductive metallic objects (8) below a surface (12), the method comprising the steps:
determining a movement of the scanning detector (1) along a measuring-direction (9) by a movement sensor (13)
injecting an alternating excitation-current (33) in a excitation-coil arrangement (22, 23) of a field-sensor (13) comprising a pair of primary pickup-coils (24, 25) along the measuring-direction (9) and the excitation-coil arrangement (22, 23) arranged between the primary pickup-coils (24, 25),
determining a phase (phi) between the alternating excitation-current (33) and a difference 36 of induced voltage-signals (34, 35) in the primary pickup-coils (24, 25) by a phase-analyser (38),
determining a slope of the phase (phi) by identification unit (17),
identifying the structure (2) by discriminating among the first structures (2) and the second structures (6) based on whether the slope is increasing or decreasing by the identification unit (17), and
displaying or communicating the identified structure (2, 6) by a display (18) or a transceiver (20); **characterized by**
determining a magnitude of eddy currents in the primary pickup-coils (24, 25) or in the secondary pickup-coils (26, 27) by a magnitude-analyser (42) and
identifying the structure (6) as a third structure (5) only made of copper-based objects (8) based on a flat slope of the phase (phi) and the magnitude exceeding a threshold.

10. Detection method according to claim 9 wherein a frequency of the alternating current is in the range of 8 kHz and 25 kHz.

11. Detection method according to claim 9 to 10 wherein the non-magnetic and highly conductive metallic comprise metals with an electric conductivity of at least 250 nS/m.

12. Detection method according to claim 9 wherein the non-magnetic and highly conductive metallic objects (8) are copper-based objects (8) or aluminium-based objects (8).

## Patentansprüche

1. Abtastdetektor (1) zum Detektieren und Identifizieren einer Struktur als eine erste Struktur (2), die nur aus eisenbasierten Objekten (7) besteht, oder eine zweite Struktur (6), die eisenbasierte Objekte (7) und nicht magnetische und hochleitfähige Metallobjekte (8) unterhalb einer Oberfläche (12) umfasst, umfassend:
einen Bewegungssensor (13) zum Bestimmen einer Bewegung des Abtastdetektors (1) entlang einer Messrichtung (9),
einen Feldsensor (13), der ein Paar von primären Sondenspulen (24, 25) entlang der Messrichtung (9) und eine Erregerspulenanordnung (22, 23), die zwischen den primären Sondenspulen (24, 25) angeordnet ist, umfasst,
eine Stromquelle (31), die einen Erregerwechselstrom (33) in die Erregerspulenanordnung (22, 23) einspeist,
einen Phasenanalysator (38), der eine Phase (phi) zwischen dem Erregerwechselstrom (33) und einer Differenz (36) von induzierten Spannungssignalen (34, 35bz) in den primären Sondenspulen (24, 25) bestimmt,
eine Interpretationseinheit (17), die eine Steigung der Phase (phi) bestimmt und die Struktur durch Unterscheiden zwischen den ersten Strukturen (2) und den zweiten Strukturen (6) basierend darauf identifiziert, ob die Steigung sich erhöht oder verringert, und
eine Anzeige (18) oder einen Sendeempfänger (20), die bzw. der mit der identifizierten Struktur (2, 6) kommuniziert,
**gekennzeichnet durch** einen Betragsanalysator (42), der einen Betrag von Wirbelströmen in den primären Sondenspulen (24, 25) oder den sekundären Sondenspulen (26, 27) bestimmt, und wobei die Identifikationseinheit (17) die Struktur als dritte Struktur (5), die nur aus kupferbasierten Objekten (8) besteht, basierend auf einer flachen Steigung der Phase (phi) und darauf, dass der Betrag einen Schwellenwert übersteigt, identifiziert.

2. Abtastdetektor (1) nach Anspruch 1, wobei sich jede der primären Sondenspulen (24, 25) mit der Erregerspulenanordnung (22, 23) überschneidet.

3. Abtastdetektor (1) nach Anspruch 2, wobei sich mindestens ein Drittel jeder der Sondenspulen (24, 25) mit der Erregerspulenanordnung (22, 23) überschneidet und sich mindestens eine Hälfte jeder der Sondenspulen (24, 25) nicht mit der Erregerspulenanordnung (22, 23) überschneidet.

4. Abtastdetektor (1) nach den Ansprüchen 1 bis 3, wobei die Erregerspulen(23)-Anordnung zwei kreisförmige oder ellipsenförmige Erregerspulen (22, 23) umfasst, die entlang der Messrichtung (9) zueinander versetzt sind.

5. Abtastdetektor (1) nach den Ansprüchen 1 bis 4, wobei der Feldsensor (13) ein Paar von sekundären Sondenspulen (26, 27) umfasst, die auf einer Achse (40) senkrecht zu der Messrichtung (9) angeordnet sind.

6. Abtastdetektor (1) nach Anspruch 1, wobei eine Frequenz des Wechselstroms im Bereich von 8 kHz bis 25 kHz liegt.

7. Abtastdetektor (1) nach Anspruch 1 bis 6, wobei das nicht magnetische und hochleitfähige Metall Metalle mit einer elektrischen Leitfähigkeit von mindestens 250 nS/m umfasst.

8. Abtastdetektor (1) nach Anspruch 1 bis 6, wobei die nicht magnetischen und hochleitfähigen Metallobjekte (8) kupferbasierte Objekte (8) oder aluminiumbasierte Objekte (8) sind.

9. Detektionsverfahren zum Identifizieren von ersten Strukturen (2), die nur aus eisenbasierten Objekten (7) bestehen, und zweiten Strukturen (6), die eisenbasierte Objekte (7) und nicht magnetische und hochleitfähige Metallobjekte (8) unterhalb einer Oberfläche (12) umfassen, wobei das Verfahren die folgenden Schritte umfasst:
Bestimmen einer Bewegung des Abtastdetektors (1) entlang einer Messrichtung (9) durch einen Bewegungssensor (13)
Einspeisen eines Erregerwechselstroms (33) in eine Erregerspulenanordnung (22, 23) eines Feldsensors (13), der ein Paar von primären Sondenspulen (24, 25) entlang der Messrichtung (9) und die Erregerspulenanordnung (22, 23), die zwischen den primären Sondenspulen (24, 25) angeordnet ist, umfasst,
Bestimmen einer Phase (phi) zwischen dem Erregerwechselstrom (33) und einer Differenz 36 von induzierten Spannungssignalen (34, 35) in den primären Sondenspulen (24, 25) durch einen Phasenanalysator (38),
Bestimmen einer Steigung der Phase (phi) durch eine Identifikationseinheit (17),
Identifizieren der Struktur (2) durch Unterscheiden zwischen den ersten Strukturen (2) und den zweiten Strukturen (6) basierend darauf, ob die Steigung sich erhöht oder verringert, durch die Identifikationseinheit (17), und
Anzeigen oder Kommunizieren der identifizierten Struktur (2, 6) durch eine Anzeige (18) oder einen Sendeempfänger (20); **gekennzeichnet durch**
Bestimmen eines Betrags von Wirbelströmen in den primären Sondenspulen (24, 25) oder in den sekundären Sondenspulen (26, 27) durch einen Betragsanalysator (42) und Identifizieren der Struktur (6) als eine dritte Struktur (5), die nur aus kupferbasierten Objekten (8) besteht, basierend auf einer flachen Steigung der Phase (phi) und darauf, dass der Betrag einen Schwellenwert übersteigt.

10. Detektionsverfahren nach Anspruch 9, wobei eine Frequenz des Wechselstroms im Bereich von 8 kHz und 25 kHz liegt.

11. Detektionsverfahren nach Anspruch 9 bis 10, wobei das nicht magnetische und hochleitfähige Metall Metalle mit einer elektrischen Leitfähigkeit von mindestens 250 nS/m umfasst.

12. Detektionsverfahren nach Anspruch 9, wobei die nicht magnetischen und hochleitfähigen Metallobjekte (8) kupferbasierte Objekte (8) oder aluminiumbasierte Objekte (8) sind.

## Revendications

1. Détecteur à balayage (1) pour détecter et identifier une structure en tant que première structure (2) constituée uniquement d'objets à base de fer (7) ou que deuxième structure (6) comprenant des objets à base de fer (7) et des objets métalliques non magnétiques et hautement conducteurs (8) au-dessous d'une surface (12), comprenant :
un capteur de déplacement (13) pour déterminer un déplacement du détecteur à balayage (1) le long d'une direction de mesure (9),
un capteur de champ (13) comprenant une paire de bobines détectrices primaires (24, 25) le long de la direction de mesure (9) et un agencement de bobines d'excitation (22, 23) agencées entre les bobines détectrices primaires (24, 25),
une source de courant (31) injectant un courant d'excitation alternatif (33) dans l'agencement de bobines d'excitation (22, 23),
un analyseur de phase (38) déterminant une phase (phi) entre le courant d'excitation alternatif (33) et une différence (36) de signaux de tension induits (34, 35bz) dans les bobines détectrices primaires (24, 25),
une unité d'interprétation (17) déterminant une pente de la phase (phi) et identifiant la structure par discrimination entre les premières structures (2) et les deuxièmes structures (6) sur la base du fait que la pente augmente ou diminue, et
un dispositif d'affichage (18) ou un émetteur-récepteur (20) communiquant la structure identifiée (2, 6),
**caractérisé par** un analyseur d'amplitude (42) déterminant une amplitude de courants de Foucault dans les bobines détectrices primaires (24, 25) ou les bobines détectrices secondaires (26, 27) et dans lequel l'unité d'identification (17) identifie la structure en tant que troisième structure (5) uniquement constituée d'objets à base de cuivre (8) sur la base d'une pente plate de la phase (phi) et du fait que l'amplitude dépasse un seuil.

2. Détecteur à balayage (1) selon la revendication 1 dans lequel chacune des bobines détectrices primaires (24, 25) chevauche l'agencement de bobines d'excitation (22, 23).

3. Détecteur à balayage (1) selon la revendication 2 dans lequel au moins un tiers de chacune des bobines détectrices (24, 25) chevauche l'agencement de bobines d'excitation (22, 23) et au moins une moitié de chacune des bobines détectrices (24, 25) ne chevauche pas l'agencement de bobines d'excitation (22, 23).

4. Détecteur à balayage (1) selon les revendications 1 à 3 dans lequel l'agencement de bobines d'excitation (23) comprend deux bobines d'excitation circulaires ou elliptiques (22, 23) qui sont mues l'une par rapport à l'autre le long de la direction de mesure (9).

5. Détecteur à balayage (1) selon les revendications 1 à 4 dans lequel le capteur de champ (13) comprend une paire de bobines détectrices secondaires (26, 27) agencées sur un axe (40) perpendiculaire à la direction de mesure (9).

6. Détecteur à balayage (1) selon la revendication 1 dans lequel une fréquence du courant alternatif est dans la plage de 8 kHz et 25 kHz.

7. Détecteur à balayage (1) selon la revendication 1 à 6 dans lequel les métaux non magnétiques et hautement conducteurs comprennent des métaux avec une conductivité électrique d'au moins 250 nS/m.

8. Détecteur à balayage (1) selon la revendication 1 à 6 dans lequel les objets métalliques non magnétiques et hautement conducteurs (8) sont des objets à base de cuivre (8) ou des objets à base d'aluminium (8).

9. Procédé de détection consistant à identifier des première structures (2) constituées uniquement d'objets à base de fer (7) ou des deuxièmes structures (6) comprenant des objets à base de fer (7) et des objets métalliques non magnétiques et hautement conducteurs (8) au-dessous d'une surface (12), le procédé comprenant les étapes consistant à :
déterminer par un capteur de déplacement (13) un déplacement du détecteur à balayage (1) le long d'une direction de mesure (9),
injecter un courant d'excitation alternatif (33) dans un agencement de bobines d'excitation (22, 23) d'un capteur de champ (13) comprenant une paire de bobines détectrices primaires (24, 25) le long de la direction de mesure (9) et un agencement de bobines d'excitation (22, 23) agencées entre les bobines détectrices primaires (24, 25),
déterminer une phase (phi) entre le courant d'excitation alternatif (33) et une différence (36) de signaux de tension induits (34, 35) dans les bobines détectrices primaires (24, 25) par un analyseur de phase (38),
déterminer une pente de la phase (phi) par l'unité d'identification (17),
identifier par l'unité d'identification (17) la structure (2) par discrimination entre les premières structures (2) et les deuxièmes structures (6) sur la base du fait que la pente augmente ou diminue, et
afficher ou communiquer la structure identifiée (2, 6) par un dispositif d'affichage (18) ou un émetteur-récepteur (20) ; **caractérisé par**
la détermination d'une amplitude de courants de Foucault dans les bobines détectrices primaires (24, 25) ou dans les bobines détectrices secondaires (26, 27) par un analyseur d'amplitude (42) et
l'identification de la structure (6) en tant que troisième structure (5) uniquement constituée d'objets à base de cuivre (8) sur la base d'une pente plate de la phase (phi) et du fait que l'amplitude dépasse un seuil.

10. Procédé de détection selon la revendication 9 dans lequel une fréquence du courant alternatif est dans la plage de 8 kHz et 25 kHz.

11. Procédé de détection selon la revendication 9 à 10 dans lequel les métaux non magnétiques et hautement conducteurs comprennent des métaux avec une conductivité électrique d'au moins 250 nS/m.

12. Procédé de détection selon la revendication 9 dans lequel les objets métalliques non magnétiques et hautement conducteurs (8) sont des objets à base de cuivre (8) ou des objets à base d'aluminium (8).
